# EUROPÄISCHE PATENTSCHRIFT

(11) **EP 0 979 441 B1**
(45) Veröffentlichungstag und Bekanntmachung des Hinweises auf die Patenterteilung: **10.10.2001**
(21) Anmeldenummer: 98963334.2
(22) Anmeldetag: 06.11.1998
(51) Int. Cl.: G05D 23/24, F02D 41/14, G01N 27/407

(54) **SCHALTUNG ZUM BEHEIZEN EINES BAUTEILS**
CIRCUIT FOR HEATING A COMPONENT
CIRCUIT SERVANT A RECHAUFFER UN COMPOSANT

(30) Priorität: 08.11.1997 DE 19749535
(43) Veröffentlichungstag der Anmeldung: 16.02.2000
(73) Patentinhaber: ROBERT BOSCH GMBH, 70442 Stuttgart (DE)
(72) Erfinder: KOCH, Stefan, D-77855 Achern (DE)
(86) Internationale Anmeldenummer: DE9803240
(87) Internationale Veröffentlichungsnummer: WO9924887

(56) Entgegenhaltungen:
- EP-A- 0 779 426
- DE-A- 4 312 289
- DE-A- 19 531 786
- US-A- 5 656 190

## Beschreibung

### Stand der Technik

Die Erfindung geht aus von einer Schaltung zum Beheizen eines Bauteils nach der Gattung des unabhängigen Anspruchs. Aus der DE-A 195 31 786 ist eine Schaltungsanordnung zum Ansteuern eines Heizwiderstandes bekannt, der insbesondere zum Beheizen eines Luftgütesensors vorgesehen ist. Die Temperatur des Heizwiderstandes ist auf einen vorgegebenen Wert geregelt. Der Heizwiderstand wird mit einem Zweipunkttemperaturregler angesteuert. Weichen Soll- und Isttemperatur voneinander ab, so erfolgt eine Bestromung des Heizwiderstands. Die Isttemperatur des Heizwiderstandes wird indirekt durch Erfassen seines elektrischen Widerstandes ermittelt. Der Heizwiderstand ist Bestandteil eines Spannungsteilers, durch den während der Abschaltphase des Heizstroms ein geringer Strom fließt, der über die Spannungsabfälle im Spannungsteiler einen Rückschluß auf den Innenwiderstand des Heizelements zuläßt.

Eine andere Schaltungsanordnung zur Temperaturregelung einer Widerstandsheizung ist aus der DE-A 43 12 289 bekannt geworden. Anstelle einer Zweipunktregelung ist bei dieser vorbekannten Schaltungsanordnung eine kontinuierliche Regelung der Heizleistung vorgesehen. Erfaßt wird auch hier der elektrische Widerstand des Widerstandsheizelements, das in einem Spannungsteiler angeordnet ist. Ausgewertet wird die Differenz der Spannungsabfälle, die einerseits an einem bekannten Widerstand und andererseits am Widerstandsheizelement auftreten. Der Betrag der Differenz legt die Betriebsspannung des das Widerstandsheizelement enthaltenden Spannungsteilers fest.

Die vorbekannten Widerstandsheizelemente sind zur Beheizung von Sensoren vorgesehen, die zum ordnungsgemäßen Arbeiten eine gegenüber der Umgebungstemperatur erhöhte Betriebstemperatur aufweisen müssen. Bei den vorbekannten Schaltungsanordnungen wird davon ausgegangen, daß die Betriebstemperatur des Sensors stets der des Widerstandsheizelements wenigstens näherungsweise entspricht.

Der Erfindung liegt die Aufgabe zugrunde, eine Schaltung zum Beheizen eines Bauteils anzugeben, die mit einfachen Mitteln das Erreichen der Betriebstemperatur des zu beheizenden Bauteils anzeigt.

Die Aufgabe wird durch die im unabhängigen Anspruch angegebenen Merkmale gelöst.

### Vorteile der Erfindung

Die erfindungsgemäße Schaltung zum Beheizen eines Bauteils weist den Vorteil auf, daß eine direkte oder indirekte Erfassung der Temperatur des zu beheizenden Bauteils nicht erforderlich ist. Das Erreichen der Betriebstemperatur wird ausschließlich aus dem Betriebsverhalten des Widerstandsheizelements abgeleitet. Erfindungsgemäß ist wenigstens ein Beobachtungszeitintervall vorgegeben, innerhalb dem eine Ermittlung der mittleren, dem Widerstandsheizelement zugeführten Energie vorgesehen ist. Eine Unterschreitung einer vorgegebenen Schwelle der mittleren Energie wird als wenigstens näherungsweises Erreichen der vorgegebenen Betriebstemperatur des zu beheizenden Bauteils gewertet. Die Erfindung macht sich die Tatsache zunutze, daß die dem Heizelement zuzuführende Energie während des Aufheizvorgangs des zu beheizenden Bauteils höher ist als im stationären Betriebszustand, bei dem das zu beheizende Bauteil die Betriebstemperatur erreicht hat.
Die vorzugebende Schwelle der mittleren Energie wird vorzugsweise experimentell ermittelt. Im Rahmen einer Serienproduktion kann am Bandende eine individuelle Festlegung der Schwelle für jedes zu beheizende Bauteil erfolgen.

Vorteilhafte Weiterbildungen und Ausgestaltungen der erfindungsgemäßen Schaltung ergeben sich aus abhängigen Ansprüchen.

Besonders vorteilhaft ist der Einsatz eines Zweipunktreglers zur Temperaturregelung des Widerstandsheizelements. Der Zweipunkttemperaturregler vergleicht die am Widerstandsheizelement auftretende Isttemperatur mit der vorgegebenen Solltemperatur und verbindet in Abhängigkeit vom Ergebnis das Widerstandsheizelement mit einer Energiequelle oder unterbricht die Verbindung.

Eine vorteilhafte Weiterbildung dieser Ausgestaltung sieht vor, daß die Einschaltzeit des Zweipunkttemperaturreglers innerhalb des Beobachtungszeitintervalls ermittelt wird. Die Einschaltzeit ist unmittelbar ein Maß für die dem Widerstandsheizelement mittlere zugeführte Energie. Anstelle einer Integration der dem Widerstandsheizelement zugeführten Energie ist somit lediglich die Ermittlung einer Zeitdauer vorzusehen. Als Schwelle der mittleren Energie ist in diesem Fall eine maximale Zeitdauer innerhalb des Beobachtungszeitintervalls vorzugeben.

Eine andere vorteilhafte Weiterbildung dieser Ausgestaltung sieht vor, daß die Anzahl der Einschaltvorgänge des Zweipunkttemperaturreglers innerhalb des Beobachtungszeitintervalls ermittelt wird. Nach dem Aufheizvorgang des zu beheizenden Bauteils reduziert der Zweipunkttemperaturregler die mittlere, dem Widerstandsheizelement zugeführte elektrische Energie durch häufigeres Ein- und Abschalten. Die Schwelle für das Unterschreiten der mittleren Energie entspricht in diesem Fall der Vorgabe einer Anzahl von Einschaltvorgängen, die innerhalb des Beobachtungszeitintervalls mindestens erreicht werden muß.

Eine andere vorteilhafte Ausgestaltung der erfindungsgemäßen Schaltung sieht vor, daß der Innenwiderstand des Widerstandsheizelements als Maß für seine Temperatur gewertet wird. Ein separater Temperatursensor zur Erfassung der Temperatur des Widerstandsheizelements ist dadurch nicht erforderlich. Die Ermittlung des Innenwiderstands des Widerstandsheizelements kann mit einer der Maßnahmen erfolgen, die in den im Abschnitt "Stand der Technik" angegebenen Dokumenten im einzelnen erläutert sind.

Als zu beheizendes Bauteil ist vorzugsweise ein Sensor vorgesehen. Der Sensor kann beispielsweise ein Gassensor sein, der die Bestandteile eines zu untersuchenden Gases in ein entsprechendes Ausgangssignal umsetzt. Solche Sensoren werden eingesetzt beispielsweise bei der Ermittlung der Gasbestandteile von Brennkraftmaschinenabgasen oder bei der Ermittlung der Güte von Atemluft durch Bewertung zumindest des CO- und NOx-Anteils in der Atemluft.

Weitere vorteilhafte Weiterbildungen und Ausgestaltungen der erfindungsgemäßen Schaltung zum Beheizen eines Bauteils ergeben sich aus weiteren abhängigen Ansprüchen und aus der folgenden Beschreibung.

### Zeichnung

In der Figur ist ein Blockschaltbild einer erfindungsgemäßen Schaltung zum Beheizen eines Bauteils gezeigt.

Die Figur zeigt ein zu beheizendes Bauteil 10, das über eine thermische Kopplung 11 mit einem Widerstandsheizelement 12 thermisch verbunden ist. Die Temperatur des Widerstandsheizelements wird von einer Temperaturermittlung 13 festgestellt und als Isttemperatur Temp1 einem Temperaturregler 14 zugeleitet. Weiterhin erhält der Temperaturregler 14 die Solltemperatur Temp2 des Widerstandsheizelements 12 zugeführt. Der Temperaturregler 14 gibt ein Heizsignal 15 an das Widerstandsheizelement 12 ab. Die Energie zur Beheizung des Widerstandsheizelements 12 wird von einer Energiequelle 16 bereitgestellt. Das Heizsignal 15 ist einer Auswerteanordnung 17 zugeleitet, die weiterhin ein Beobachtungszeitintervall Ti sowie eine Schwelle S zugeführt erhält. Die Auswerteanordnung 17 gibt ein Betriebsbereitschaftssignal B ab.

Figur 2 zeigt das Heizsignal 15 in Abhängigkeit von der Zeit, ausgehend von einem Startzeitpunkt T0 zumindest während des Beobachtungszeitintervalls Ti.

Figur 3 zeigt ebenfalls das Heizsignal 15 in Abhängigkeit von der Zeit, ausgehend von einem Betriebszeitpunkt T1 zumindest während des Beobachtungszeitintervalls Ti. Eingetragen sind Einschaltvorgänge E1, E2, E3, E4 des Heizsignals 15.

Die erfindungsgemäße Schaltung zum Beheizen des Bauteils 10 arbeitet folgendermaßen:

Das zu beheizende Bauteil 10 ist beispielsweise ein Sensor, der für das ordnungsgemäße Arbeiten eine vorgegebene Betriebstemperatur aufweisen muß. Solche Sensoren sind beispielsweise Gassensoren, welche die chemischen Bestandteile eines Gases detektieren und deren Konzentration erfassen. Gassensoren werden beispielsweise zur Analyse des Abgases von Brennkraftmaschinen eingesetzt, um in Abhängigkeit vom Ergebnis die Kraftstoffzumessung zu beeinflussen. Andere Gassensoren analysieren die Zusammensetzung der Atemluft, um in Abhängigkeit vom Ergebnis eine Belüftungseinrichtung beeinflussen zu können. Bei derartigen chemischen Sensoren geht im allgemeinen die Temperatur des Sensors unmittelbar in das Meßergebnis ein. Eine Ermittlung der Temperatur eines derartigen Sensors indirekt, beispielsweise über seinen elektrischen Innenwiderstand, ist daher nicht in allen Fällen ausreichend genau. Ein zusätzlicher Aufwand durch den Einsatz eines separaten Temperaturfühlers ist unerwünscht. Erfindungsgemäß ist deshalb vorgesehen, die mittlere dem Widerstandsheizelement 12 zugeführte Energie in dem Beobachtungszeitintervall Ti zu ermitteln und mit der vorgegebenen Schwelle S zu vergleichen. Bei einem Durchschreiten der Schwelle S wird das Betriebsbereitschaftssignal B ausgegeben.

Die Temperatur des Widerstandsheizelements 12 wird auf die vorgegebene Solltemperatur Temp2 mit dem Temperaturregler 14 geregelt. Der Temperaturregler 14 vergleicht die Solltemperatur Temp2 mit der Isttemperatur Temp1 des Widerstandsheizelements 12. Die Temperaturermittlung 13 ist zur Temperaturermittlung des Widerstandsheizelements 12 vorgesehen. Hierbei kann es sich um einen Temperatursensor handeln. Vorzugsweise wird die Temperatur indirekt über den Innenwiderstand des Widerstandsheizelements 12 ermittelt. Der Innenwiderstand ist unmittelbar ein Maß für die Temperatur. Auf die Ermittlung des Innenwiderstands des Widerstandsheizelements 12 wird hier nicht näher eingegangen. Verwiesen wird auf den eingangs genannten Stand der Technik. Aus der DE-A 195 31 786 ist eine Schaltung bekannt, bei der das Widerstandsheizelement 12 in einem Spannungsteiler angeordnet ist. Aus Spannungsabfällen am Spannungsteiler, die durch einen Ruhestrom während Bestromungspausen auftreten, wird auf den Innenwiderstand des Widerstandsheizelements 12 geschlossen. Eine Schaltung, bei der eine Unterbrechung der Beheizung des Widerstandsheizelements 12 nicht vorgesehen ist, ist aus der DE-A 43 12 289 bekannt. Dort werden Spannungsabfälle während des Fließens des Heizstroms ermittelt und zur kontinuierlichen Regelung der Betriebsspannung des Widerstandsheizelements 12 herangezogen.

Der Temperaturregler 14 ist vorzugsweise als Zweipunkttemperaturregler ausgebildet. Der Zweipunkttemperaturregler vergleicht die Solltemperatur Temp2 mit der Isttemperatur Templ. Solange die Solltemperatur Temp2 nicht überschritten wird, verbindet der Zweipunkttemperaturregler die Energiequelle 16 mit dem Widerstandsheizelement 12. Das Heizsignal 15 ist in diesem Fall wenigstens näherungsweise gleich der Spannung der Energiequelle 16. Das Heizsignal 15 kann aber auch als Strom angesehen werden, der durch das Widerstandsheizelement 12 fließt. Anstelle der Ausbildung als Zweipunktregler des Temperaturreglers 14 kann auch eine kontinuierliche Regelung vorgesehen sein.

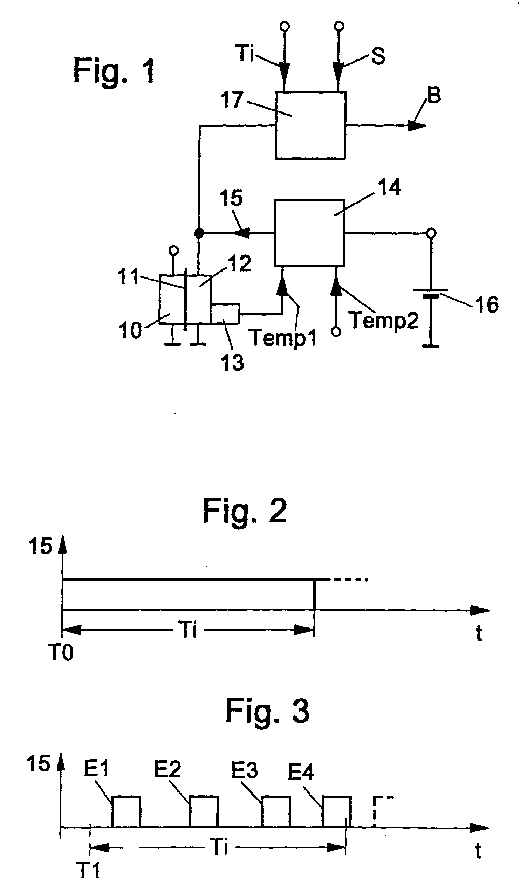

Die Auswerteanordnung 17 ermittelt innerhalb des vorgegebenen Beobachtungszeitintervalls Ti die mittlere, dem Widerstandsheizelement 12 zugeführte Energie. Gemäß dem gezeigten Ausführungsbeispiel nach Figur 1 kann dies beispielsweise durch eine Bewertung des der Auswerteanordnung 17 zugeführten Heizsignals 15 erfolgen. Eine besonders einfache Ermittlung der mittleren Energie ergibt sich, wenn der Temperaturregler 14 als Zweipunkttemperaturregler ausgebildet ist. Entsprechende Signalverläufe sind in den Figuren 2 und 3 gezeigt.

Figur 2 zeigt den Betriebsfall, ausgehend vom Startzeitpunkt T0. Nach dem Auftreten des Heizsignals 15 zum Startzeitpunkt T0 wird bei einem abgekühlten Bauteil 10 das Heizsignal 15 während des gesamten Beobachtungszeitintervalls Ti vorhanden sein. Die mittlere, dem Widerstandsheizelement 12 zugeführte Energie kann durch eine Integration des Heizsignals 15 erhalten werden. Bei einem Zweipunkttemperaturregler vereinfacht sich die Integration zu einer Aufsummierung der Einschaltzeiten. Die Schwelle S ist in diesem Fall als eine maximale Zeit für die Einschaltdauer während des Beobachtungszeitintervalls Ti festzulegen. Im gezeigten Ausführungsbeispiel nach Figur 2 überschreitet die Einschaltzeit die vorzugebende Schwelle S, so daß das Betriebsbereitschaftssignal B nicht auftritt.

Eine Abgabe des Betriebsbereitschaftssignals B kann erst erfolgen, wenn die mittlere, dem Widerstandsheizelement 12 zugeführte Energie die Schwelle S unterschreitet. Ein solcher Fall ist in Figur 3 gezeigt. Vorausgesetzt wird wieder ein Zweipunkttemperaturregler. Ausgehend von einem beliebigen Betriebszeitpunkt T1 wird wieder während des Beobachtungszeitintervalls Ti die mittlere, dem Widerstandsheizelement 12 zugeführte Energie ermittelt. Die Energieermittlung beschränkt sich wieder auf die Aufsummierung der Einschaltzeiten, die das Heizsignal 15 gemäß Figur 3 aufweist. Im gezeigten Ausführungsbeispiel treten im Beobachtungszeitintervall Ti vier Einschaltvorgänge E1, E2, E3, E4 auf. Die Summe der Einschaltdauern wird mit der Schwelle S verglichen. Unterschreiten die innerhalb des Beobachtungszeitintervalls Ti aufsummierten Einschaltdauern die Schwelle S, so wird das Betriebsbereitschaftssignal B ausgegeben.

Eine andere vorteilhafte Ausgestaltung sieht vor, daß die Anzahl der Einschaltvorgänge E1, E2, E3, E4 ausgewertet wird, die während des Beobachtungszeitintervalls Ti auftreten. Im Beobachtungszeitintervall Ti gemäß dem in Figur 2 gezeigten Betriebsfall liegt lediglich ein Einschaltvorgang vor. Zum späteren, in Figur 3 gezeigten Betriebszeitpunkt T1 treten vier Einschaltvorgänge E1, E2, E3, E4 während des Beobachtungszeitintervalls Ti auf. Überschreitet die Anzahl der Einschaltvorgänge E1, E2, E3, E4 eine vorgegebene Anzahl, beispielsweise die Zahl 3, so wird das Betriebsbereitschaftssignal B ausgegeben.

Die Ermittlung der Schwelle S, die der mittleren, im Beobachtungszeitintervall Ti dem Widerstandsheizelement 12 zugeführten Energie entspricht, wird vorzugsweise experimentell festgestellt. Anhand eines Versuchs, bei dem das zu beheizende Bauteil 10 die vorgegebene Betriebstemperatur erreicht hat, kann festgestellt werden, welche mittlere Energie zur Aufrechterhaltung der Betriebstemperatur erforderlich ist. Die Schwelle kann dann als ein Energiebetrag festgelegt werden, der insgesamt in einem Beobachtungszeitintervall Ti unterschritten werden muß, um das Betriebsbereitschaftssignal B auszugeben. Gemäß den Ausführungsbeispielen kann die Schwelle S eine maximale Zeit betragen, die unterschritten werden muß, oder eine minimale Anzahl von Einschaltvorgängen E1, E2, E3, E4 sein, die innerhalb eines Beobachtungszeitintervalls Ti überschritten sein muß.

## Patentansprüche

1. Schaltung zum Beheizen eines Bauteils (10), mit einem von einer elektrischen Energiequelle (16) gespeisten Widerstandsheizelement (12), das mit dem zu beheizenden Bauteil (10) thermisch gekoppelt ist, mit einem Temperaturregler (14), der die Temperatur des Widerstandsheizelements (12) in Abhängigkeit von der Isttemperatur (Temp1) des Widerstandsheizelements (12) und einer vorgegebenen Solltemperatur (Temp2) regelt, **dadurch gekennzeichnet, daß** wenigstens ein Beobachtungszeitintervall (Ti) vorgegeben ist, innerhalb dem eine Ermittlung der mittleren, dem Widerstandsheizelement (12) zugeführten Energie vorgesehen ist, und daß eine Unterschreitung einer vorgegebenen Schwelle (S) der mittleren Energie als wenigstens näherungsweises Erreichen einer vorgegebenen Betriebstemperatur des zu beheizenden Bauteils (10) gewertet ist.

2. Schaltung nach Anspruch 1, **dadurch gekennzeichnet, daß** der Temperaturregler (14) ein Zweipunkttemperaturregler ist, der das Widerstandselement (12) zeitweise mit der Energiequelle (16) verbindet.

3. Schaltung nach Anspruch 2, **dadurch gekennzeichnet, daß** die Schwelle (S) als eine Zeitdauer vorgegeben ist, welche die innerhalb des Beobachtungszeitintervalls (Ti) liegende Einschaltdauer des vom Zweipunkttemperaturregler (14) abgegebenen Heizsignals (15) unterschreiten muß.

4. Schaltung nach Anspruch 2, **dadurch gekennzeichnet, daß** die Schwelle (S) als eine Anzahl von Einschaltvorgängen (E1, E2, E3, E4) vorgegeben ist, die während des Beobachtungszeitintervalls (Ti) überschritten sein muß.

5. Schaltung nach einem der Ansprüche 1 bis 4, **dadurch gekennzeichnet, daß** der Innenwiderstand des Widerstandsheizelements (12) als Maß für seine Temperatur gewertet ist.

6. Schaltung nach einem der vorhergehenden Ansprüche, **dadurch gekennzeichnet, daß** das Bauteil (10) wenigstens ein Gassensor ist.

7. Schaltung nach Anspruch 6, **dadurch gekennzeichnet, daß** der Sensor wenigstens auf Komponente der Atemluft detektiert.

8. Schaltung nach Anspruch 6, **dadurch gekennzeichnet, daß** der Sensor wenigstens eine Komponente eines Brennkraftmaschinenabgases detektiert.

## Claims

1. Circuit for heating a component (10), having a resistance heating element (12) which is fed from an electrical power source (16) and is thermally coupled to the component (10) to be heated, having a temperature regulator (14) which regulates the temperature of the resistance heating element (12) as a function of the actual temperature (Temp1) of the resistance heating element (12) and of a preset nominal temperature (Temp2), **characterized in that** at least one observation time interval (Ti) is preset, within which determination of the mean power supplied to the resistance heating element (12) is provided, and **in that**, if the mean power is less than a predetermined threshold (S), this is assessed as indicating that the component (10) to be heated has at least approximately reached a preset operating temperature.

2. Circuit according to Claim 1, **characterized in that** the temperature regulator (14) is a two-point temperature regulator, which connects the resistance element (12) to the power source (16) at times.

3. Circuit according to Claim 2, **characterized in that** the threshold (S) is preset as a time period which must be greater than the time for which the heating signal (15) emitted from the two-point temperature regulator (14) is switched on within the observation time interval (Ti).

4. Circuit according to Claim 2, **characterized in that** the threshold (S) is preset as a number of switching-on processes (E1, E2, E3, E4) which must be exceeded during the observation time interval (Ti).

5. Circuit according to one of Claims 1 to 4, **characterized in that** the internal resistance of the resistance heating element (12) is assessed as a measure of its temperature.

6. Circuit according to one of the preceding claims, **characterized in that** the component (10) is at least one gas sensor.

7. Circuit according to Claim 6, **characterized in that** the sensor detects at least one component of the breathing air.

8. Circuit according to Claim 6, **characterized in that** the sensor detects at least one component of the exhaust gas from an internal combustion engine.

## Revendications

1. Circuit servant à réchauffer un composant (10), comprenant un élément chauffant à résistance (12) alimenté par une source d'énergie électrique (16) et accouplé thermiquement au composant à réchauffer (10) ainsi qu'un régulateur de température (14) régulant la température de l'élément chauffant (12) en fonction de la température réelle (Temp1) de l'élément chauffant (12) et d'une température imposée (Temp2) donnée à l'avance,
**caractérisé en ce qu'**
il est fixé à l'avance au moins un intervalle de temps d'observation (Ti) à l'intérieur duquel il est prévu de déterminer la valeur moyenne de l'énergie fournie à l'élément chauffant (12), le maintien en dessous d'un seuil (S) de l'énergie moyenne étant considéré comme signifiant que le composant à réchauffer (10) a atteint, au moins approximativement, une température de fonctionnement préfixée.

2. Circuit selon la revendication 1,
**caractérisé en ce que**
le régulateur de température (14) est un régulateur tout ou rien qui met en liaison, à certains moments, l'élément chauffant à résistance (12), avec la source d'énergie (16).

3. Circuit selon la revendication 2,
**caractérisé en ce que**
le seuil (S) est préfixé sous la forme d'une durée qui doit être dépassée par la durée d'enclenchement à l'intérieur de l'intervalle d'observation (Ti) du signal de chauffage (15) délivré par le régulateur de température tout ou rien (14).

4. Circuit selon la revendication 2,
**caractérisé en ce que**
le seuil (S) est préfixé sous la forme d'un nombre d'opérations d'enclenchement (E1, E2, E3, E4) qui doit être dépassé pendant l'intervalle d'observation (Ti).

5. Circuit selon l'une quelconque des revendications 1 à 4,
**caractérisé en ce que**
la résistance interne de l'élément de chauffage (12) est convertie comme une mesure de sa température.

6. Circuit selon l'une quelconque des revendications précédentes,
**caractérisé en ce que**
le composant (10) est au moins un détecteur de gaz.

7. Circuit selon la revendication 6,
**caractérisé en ce que**
le composant (10) détecte au moins les constituants de l'air respiré.

8. Circuit selon la revendication 6,
**caractérisé en ce que**
le détecteur détecte au moins un composant du gaz d'échappement d'un moteur à combustion interne.
